# EUROPÄISCHE PATENTANMELDUNG

(11) **EP 4 592 635 A1**
(43) Veröffentlichungstag der Anmeldung: **30.07.2025**
(21) Anmeldenummer: 25153000.2
(22) Anmeldetag: 21.01.2025
(51) Int. Cl.: F41H 7/00, F41A 23/00, F41G 1/35, F41G 3/06, F41G 3/16

(54) **SYSTEM UMFASSEND EINEN ROBOTER UND WENIGSTENS EINE VORRICHTUNG ZUR ZIELGERICHTETEN AUSRICHTUNG VON SCHUSSWERKZEUGEN**

(30) Priorität: 23.01.2024 DE 102024101919
(71) Anmelder: ELP GmbH European Logistic Partners, 42115 Wuppertal (DE)
(72) Erfinder: SABOURI, Morad, 42389 Wuppertal (DE); MAUS, Alexander, 42327 Wuppertal (DE); KOKYSCHEV, Egor, 42103 Wuppertal (DE); BASTIAN, Bastian, 42105 Wuppertal (DE)
(74) Vertreter: Kohlstedde, Eva

(57) **Zusammenfassung**

Die Erfindung betrifft ein System umfassend einen Roboter (13) und wenigstens eine Vorrichtung (10) zur zielgerichteten Ausrichtung von Schusswerkzeugen (11) mit einer Schussachse auf ein zu treffendes Ziel. Es ist mindestens ein Trägersystem (40) für ein Schusswerkzeug (11) vorgesehen, welches eine Zieleinrichtung umfasst und wenigstens eine Aufnahme (41) aufweist, in welche das Schusswerkzeug (11) bereichsweise einbringbar ist. Die Erfindung schlägt nun vor, dass in die Aufnahme (41) eine Vielzahl unterschiedlich geformter Schusswerkzeuge (11) einbringbar und dort festlegbar ist (Fig. 1).

## Beschreibung

Die Erfindung betrifft ein System umfassend einen Roboter und wenigstens eine Vorrichtung zur zielgerichteten Ausrichtung von Schusswerkzeugen gemäß dem Oberbegriff von Anspruch 1. Solche Schusswerkzeuge oder Disruptoren werden beispielsweise eingesetzt für die Entschärfung von gefährlichen Objekten, wie Bomben, unkonventionellen Spreng- und Brandvorrichtungen o.ä. Häufig sind die Schusswerkzeuge hierfür auf Fernlenkmanipulatoren oder Robotern angeordnet, um die mit der Entschärfung befasste Bedienperson nicht zu gefährden. Diese kann dann in einem größeren Abstand und vorzugsweise hinter einer Sicherung die Entschärfung aus der Entfernung vornehmen. Oft wird die Entschärfung durch einen so genannten Disruptor vorgenommen, der ein impulsbasiertes Schusswerkzeug umfasst und so die Entschärfung vornimmt. Es kann aber auch geboten sein, das zu entschärfende Objekt zunächst zu untersuchen, beispielsweise mittels Röntgenstrahlung. Auch diese Untersuchung sollte vorzugsweise auf Entfernung erfolgen, um keine Bedienpersonen durch das Objekt und/oder durch die Röntgenstrahlung zu gefährden. Im Weiteren wird auch dieses Beaufschlagen mit Röntgen- oder anderer elektromagnetischer Strahlung als "Schuss" bezeichnet und dass diese Strahlung abgebende Gerät als "Schusswerkzeug".

Wichtig ist sowohl bei der Untersuchung als auch bei der Entschärfung eines Objekts, dass das Schusswerkzeug möglichst genau auf das Ziel ausgerichtet werden kann. Außerdem existieren Schusswerkzeuge von verschiedenen Herstellern und mit unterschiedlichen Modellen. Viele Schusswerkzeuge sind wasserimpulsbasiert, das heißt, dass Wasser mit hohem Druck auf das Ziel abgegeben wird. Es gibt Schusswerkzeuge, die rückstoßkompensiert sind, so dass zeitgleich der gleiche Impuls in die dem Ziel entgegengerichtete Richtung ausgestoßen wird, so dass die Schussabgabe rückstoßfrei erfolgt. Andere Schusswerkzeuge sind jedoch nicht rückstoßkompensiert. Welches Schusswerkzeug in der konkreten Situation verwendet wird, hängt vom jeweiligen Anwendungsfall ab. Wichtig ist jedoch, dass die Entschärfung schnell und sicher durchgeführt werden kann, damit möglichst keine Personen geschädigt werden.

In der EP 2 722 634 A1 wird ein Verfahren zum Ausrichten eines Disruptors auf ein Ziel beschrieben. Hierbei wird eine Zielvorrichtung mit einem Laserstrahl auf das Ziel ausgerichtet. Der Disruptor wird dabei zwischen der Zielvorrichtung und dem Laser platziert und der Laserstrahl durch Spiegel so umgelenkt, dass die Richtung des Lasers mit der Schussrichtung übereinstimmt. Dieses Verfahren ist jedoch umständlich und zeitaufwändig. Auch wird bei der Ausrichtung des Disruptors auf das Ziel nicht die Entfernung zwischen Disruptor und Ziel berücksichtigt. Ein Roboter, auf dem der Disruptor angeordnet sein kann, wird nicht beschrieben.

Eine weitere Vorrichtung beschreibt die US 7,523,582 B1. Auch hier wird eine Lasereinheit mit zwei Lasern zwischen dem Disruptor und dem Ziel positioniert, um eine möglichst gute Ausrichtung des Disruptors zum Ziel zu erreichen. Es sind zwei Laser vorgesehen, wobei einer sein Licht auf das Ziel emittiert und der andere Laser sein Licht in die entgegengesetzte Richtung zum Disruptor hin emittiert, wo es von einer Reflektorplatte reflektiert wird. Hierdurch wird die Schusslinie des Disruptors zum Ziel hin ausgerichtet. Allerdings wird die Reflektorplatte vor Abgabe des Schusses nicht entfernt und somit zerstört. Auch hier ist kein Roboter oder eine ähnliche Vorrichtung, die den Disruptor in Position bringt, beschrieben.

Die US 2008/0276473 A1 beschreibt eine weitere Vorrichtung zur Ausrichtung eines Schusswerkzeugs auf ein Ziel. Hier sind zwei Linienlaser vorgesehen, deren Achsen in einem Winkel zueinander angeordnet sind, so dass sich die Laserebenen schneiden. Die Schnittachse der Laserebenen koinzidiert mit der Schussachse des Schusswerkzeugs. Durch Messung der Breite der Laserebenen wird die Entfernung vom Schusswerkzeug zum Ziel hin bestimmt. Je nach Sichtverhältnissen und Oberfläche des Ziels kann dieses jedoch ungenau sein.

Darüber hinaus müssen die Linienlaser bei der Zielerfassung und Ausrichtung permanent in Betrieb sein, um die Entfernung zu messen. Dies bedeutet eine hohe Strahlungsaussendung über die gesamte Dauer der Zielerfassung und damit eine hohe Strahlungsbelastung und einen permanenten Energieverbrauch. Auch hier ist es nicht beschrieben, den Disruptor über einen Roboter in Position zu bringen.

Des Weiteren beschreibt die US 2012/0180366 A1 eine Zielvorrichtung für einen Disruptor zur Bombenentschärfung, bei dem zwei Linienlaser ebenfalls in einem Winkel zueinander angeordnet sind, dass die Linien sich schneiden. Auch hier koinzidiert der Schnittpunkt der Linienlaser mit der Schussachse des Schusswerkzeugs. Um den Abstand zwischen Schusswerkzeug und Ziel zu bestimmen, ist eine Entfernungsmessung über einen weiteren Laser vorgesehen. Durch die Bestimmung der Entfernung ist es möglich, den Zielpunkt und damit auch das Schusswerkzeug auf das Ziel auszurichten. Eine Möglichkeit das Schusswerkzeug mittels eines Roboters in die richtige Position zu bringen, wird hier nicht beschrieben.

Die US 7,523,582 B1 beschriebt ein präzises Zielsystem für einen Laser mit einem Schusswerkzeug, einem Laser und einem Reflektor. Nachteilig ist hier, das die Vorrichtung zunächst in der Nähe des zu zerstörenden bzw. zu entschärfenden Objekts positioniert und ausgerichtet werden muss und die Bedienperson sich erst dann in einen sicheren Bereich zurückziehen kann, um die Zündung auszulösen.

Schließlich ist in der US 2007/0105070 A1 ein elektromechanischer Soldat in Form eines Roboters beschrieben, der mit einer austauschbaren Waffe ausgerüstet ist. Der Roboter ist für Kämpfe in Kriegs- und Krisengebieten aber auch für Polizeiarbeiten gedacht. Die Arten der Waffen, mit denen der Roboter ausrüstbar ist, sind sehr unterschiedlich. Es gibt auch Möglichkeiten, wie der Roboter die Waffen auf ein Ziel ausrichtet, aber diese richten sich an menschliche oder militärische Ziele. Eine genaue oder hochgenaue Ausrichtung auf ein Ziel, wie sie bei der Entschärfung eine Bombe oder einer unkonventionellen Spreng- und Brandvorrichtung notwendig ist, ist hier nicht vorgesehen. Auch ist nicht beschrieben, dass die verschiedenen Waffen, mit denen der elektromechanische Soldat bestückt sein kann, alle einfach in eine einzige Aufnahme am Soldaten einbringbar sind. Dass dies nicht der Fall sein kann, zeigt die große Bandbreite an möglichen Waffen, von Gewehren, über Flammenwerfer zu Granatwerfern etc.

Aufgabe der Erfindung ist es daher, die vorerwähnten Nachteile zu vermeiden und ein System umfassend einen Roboter und eine Vorrichtung zur Ausrichtung eines Schusswerkzeugs zu entwickeln, welches ohne größere Umbauten mit den verschiedensten Formen von Schusswerkzeugen ausgestattet werden kann. Diese Aufgabe wird durch die kennzeichnenden Merkmale des Anspruchs 1 gelöst, denen folgende besondere Bedeutung zukommt.

Es ist ein Trägersystem mit einer Aufnahme für das Schusswerkzeug vorgesehen, wobei die Aufnahme so ausgestaltet ist, dass eine Vielzahl verschieden geformter Schusswerkzeuge mit unterschiedlicher Wirkungsweise in die Aufnahme einbringbar und dort festlegbar ist, ohne langwierige Umbauten vorzunehmen. Somit ist es möglich, dass eine Bedienperson sich das Schusswerkzeug aussucht, welches in der konkreten Situation am besten geeignet ist. Hierdurch ist es möglich, schnell das Schusswerkzeug auszusuchen, welches in der Situation am besten geeignet ist und dieses im Trägersystem am Roboter anzuordnen.

Besonders einfach ist es, wenn eine oder mehrere Hülsen vorgesehen sind, die in die Aufnahme am Trägersystem einbringbar sind und in die das Schusswerkzeug einbringbar ist. Von diesen Hülsen können mehrere vorgesehen sein, um stark unterschiedliche Schusswerkzeuge in die Aufnahme einzubringen. Die Hülsen können aus Kunststoff oder Metall bestehen und kostengünstig in der Herstellung und einfach in der Montage sein, so dass schnell auf verschiedenste Schusswerkzeuge umgerüstet werden kann. Auch werden so Fertigungstoleranzen und Verschleiß ausgeglichen und das Schusswerkzeug ist trotzdem sicher im Trägersystem angeordnet. Hierzu kann die Hülse an ihrem einen Ende entlang ihrer Längsrichtung einen oder mehrere Schlitze aufweisen. Weiterhin ist ein Außengewinde vorgesehen, welches sich im Bereich des bzw. der Schlitze erstreckt. Als Gegenpart existiert eine Spannmutter, die ein Innengewinde aufweist und auf das Außengewinde der Hülse schraubbar ist. Das Außengewinde und/oder das Innengewinde sind konisch oder anderweitig progressiv zulaufend ausgebildet, so dass sich bei der Herstellung der Schraubverbindung zwischen Außen- und Innengewinde die Hülse immer mehr zusammenzieht. Hierdurch können kleinere Unterschiede im Durchmesser des Schusswerkzeuges ausgeglichen werden. Die Spannmutter kann gerändelt oder deren Außenumfang anderweitig beschaffen sein, so dass eine werkzeugfreie Montage und Demontage der Spannmutter ermöglicht wird.

Damit sich die Hülse in der Aufnahme nicht dreht, wenn die Spannmutter auf das Außengewinde geschraubt wird, kann die Hülse mindestens einen Vorsprung und die Aufnahme wenigstens eine Ausnehmung aufweisen. Der Vorsprung greift dann in die Ausnehmung ein, so dass ein Verdrehen der Hülse in der Aufnahme verhindert wird. Selbstverständlich ist hier auch eine kinematische Umkehr möglich, so dass der Vorsprung an der Aufnahme und die Ausnehmung an der Hülse vorgesehen sind.

Es gibt bevorzugt verschiedene Möglichkeiten das Trägersystem an dem Roboter zu befestigen. Wenn der Roboter über eine Greifeinheit, wie einen Greifarm, verfügt, kann er damit eine Seite des Trägersystems greifen. Besonders bevorzugt verfügt der Roboter auch über wenigstens eine Kamera, derer die Bedienperson sich bedienen kann, um die Umgebung des Roboters wahrzunehmen. Eine Kamera kann an der Greifeinheit angeordnet sein. Bevorzugterweise wird die Kamera, wenn das Trägersystem von der Greifeinheit gegriffen ist, weder von der Greifeinheit selbst noch vom Trägersystem verdeckt. So kann eine Bedienperson direkt über die Kamera in die Richtung schauen, in die das Schusswerkzeug ausgerichtet ist. Je nach verwendetem Schusswerkzeug kann die Bedienperson auch noch den Lauf des Schusswerkzeugs in der Kameraansicht sehen.

In einem bevorzugten Ausführungsbeispiel sind zwei Ziellaser vorgesehen, welche als Linienlaser ausgebildet sind und welche so angeordnet sind, dass deren Projektionsebenen in einem von 180° verschiedenen Winkel um die Schussachse angeordnet sind. Die Projektionsebenen schneiden sich und bilden dabei eine Kreuzungslinie, die mit der Schussachse identisch ist und die einen Zielpunkt durch die Projektion der Kreuzungslinie auf das zu treffende Ziel bildet.

Weiterhin kann ein separates Entfernungsmessgerät vorgesehen sein, welches die Entfernung zwischen dem Schusswerkzeug und dem Ziel misst, insbesondere durch den Einsatz wenigstens eines Lasers. Des Weiteren ist wenigstens eine Anzeige vorgesehen, die die gemessene Entfernung anzeigt. Durch das separate Entfernungsmessgerät kann die Entfernung zwischen Schusswerkzeug und Ziel bestimmt werden, unabhängig von dem Einsatz der Ziellaser. Hierdurch ist eine besonders genaue und effiziente Zielerfassung möglich. Insbesondere wenn die Strahlen der Ziellaser sichtbares Licht emittieren, kann der Schnittpunkt der beiden Linienlaser mit dem menschlichen Auge wahrgenommen werden. Je nach Winkel zwischen den beiden Projektionsebenen der Ziellaser wird das Ziel dann mit einem typischen "Fadenkreuz" oder mit einem Kreuz mit anderen Winkeln wahrgenommen.

Besonders bevorzugt ist wenigstens eine Anzeige vorgesehen, auf der die Entfernung zwischen dem Schusswerkzeug und dem Zielobjekt angegeben wird. So kann eine Bedienperson einschätzen, wie weit sich das Schusswerkzeug vom Zielobjekt entfernt befindet. Die Anzeige kann dabei nahe der erfindungsgemäßen Vorrichtung angeordnet sein, wobei eine Bedienperson sich entweder in der Nähe der Vorrichtung befinden kann, um die Anzeige abzulesen oder auch eine Kamera die Anzeige aufnimmt und das so entstandene Bild an eine Bedienperson sendet. Hier sind die üblichen Übertragungswege denkbar über Funk, Bluetooth, Mobilfunk, WLAN usw. oder auch über ein Kabel. Außerdem kann eine Anzeige sich beabstandet von der Vorrichtung befinden, wobei dann die gemessene Entfernung über die bereits erwähnten Übertragungswege direkt an eine Bedienperson gesendet werden kann und diese die Information über ein Mobiltelefon, ein Notebook, einen Tablet-PC, eine Smartwatch, einen stationären Computer oder andere Geräte ablesen kann. Dieses beabstandete Ausgabegerät kann dann von einer Bedienperson verwendet werden, die sich nicht im Gefahrenbereich des zu neutralisierenden Objekts befindet. Hierbei ist es besonders bevorzugt, wenn die Anzeige der Information in die Ausgabeeinheit des ohnehin verwendeten Steuerungsgeräts integriert ist.

Besonders bevorzugt ist es, wenn die Ziellaser zunächst ausgeschaltet sind und nur das Entfernungsmessgerät aktiv ist. Sobald sich die Vorrichtung dem Ziel so weit nähert, dass ein Einsatz des Schusswerkzeugs sinnvoll ist, bzw. zu einem festgelegten Zeitpunkt, an dem ein ausgewählter Distanzbereich von der Entfernung zwischen Schusswerkzeug und Zielobjekt erreicht ist, werden die Ziellaser automatisch eingeschaltet, um das Schusswerkzeug auf das Ziel auszurichten. Hierdurch wird unnötige Strahlung vermieden sowie Energie eingespart. Weiterhin ist es vorteilhaft, wenn die Vorrichtung bei Erreichen eines vorbestimmten Distanzbereichs ein optisches und/oder ein akustisches Signal aussendet. Dann ist für in der Nähe befindliche und auch für sich beabstandet aufhaltende Personen ersichtlich, dass der Distanzbereich erreicht ist und in Kürze vom Schusswerkzeug ein Schuss abgegeben werden könnte.

Außerdem ist es vorteilhaft, wenn die Ziellaser und/oder das Entfernungsmessgerät und/oder die ganze Vorrichtung auf Entfernung ein- und/oder ausgeschaltet werden kann oder können. In diesem Fall ist die Vorrichtung besonders einfach auf Entfernung zu bedienen, so dass sich eine Bedienperson nicht in den Gefahrenbereich begeben muss. Selbstverständlich ist es auch möglich die Ziellaser und/oder das Entfernungsmessgerät direkt am Gerät ein- und auszuschalten.

Das Entfernungsmessgerät kann mit einem Laser ausgestattet sein, um die Entfernung zum Ziel zu messen. Hierbei wird das von der glatten oder rauen Oberfläche des Ziels reflektierte Licht von einem am Entfernungsmessgerät befindlichen Sensor empfangen und daraus die Entfernung zum Zielobjekt ermittelt. Die Entfernung von der Vorrichtung zum Ziel kann so relativ genau ermittelt werden, auch in ungünstigen Umgebungsbedingungen. Selbstverständlich kann die Entfernung der Vorrichtung zum Ziel auch über eine anderweitige geeignete Entfernungsmesseinrichtung bestimmt werden.

In einem besonderen Ausführungsbeispiel sind die von den Ziellasern emittierten Strahlen nicht vom menschlichen Auge wahrnehmbar. Die genaue ermittelte Zielposition kann dann berechnet werden und einem Benutzer auf einer Anzeige angezeigt werden. Hier kann dann auch ein "Fadenkreuz" oder eine andere Markierung von einem Computer oder einem ähnlichen Gerät eingeblendet und so das ermittelte Ziel markiert werden.

In einem weiteren bevorzugten Ausführungsbeispiel ist für jeden der Ziellaser ein Lichtschacht vorgesehen, der den Fächer der Strahlen nachbildet und diesen umhaust, sodass er davor schützt beispielsweise mit dem Auge in den Gefährdungsbereich der Laserklasse 3 einzudringen. Der Punkt des Laserlichtaustritts wird soweit verlängert, dass der Strahlungsaustritt durch die Distanz so weit aufgefächert ist, dass der austretende Linienlaser lediglich eine Stärke nach Laserklasse 2 ausweist. Hierdurch wird der Laser weniger gefährlich für eine Bedienperson.

Bevorzugt ist wenigstens eine Kamera vorgesehen, um das Zielobjekt, die Ausrichtung der Vorrichtung zum Ziel und weitere Details an sich beabstandet aufhaltende Personen zu übermitteln, damit diese die Bedienung der Vorrichtung durchführen und ggf. Entscheidungen zum richtigen Vorgehen treffen können, ohne sich in Gefahr zu bringen. Die Kamera kann die Aufnahmen in Echtzeit an eine oder mehrere Bedienpersonen bzw. an eine oder mehrere Ausgabegeräte bzw. Anzeigen übermitteln.

Um die Vorrichtung aus der Entfernung betreiben zu können, kann diese auf dem Roboter, beispielsweise an einem ferngesteuerten Greifarm oder an einem ähnlichen Gerät montiert werden. So kann die Vorrichtung so nah wie nötig an das Zielobjekt herangebracht werden, ohne dass sich eine Bedienperson ebenfalls in diesen Bereich begeben muss. Die am Roboter vorgesehene Kamera kann als einzige Kamera dienen, um das Zielobjekt, die Ausrichtung der Vorrichtung zum Ziel und weitere Details an eine oder mehrere Bedienpersonen zu übermitteln. Hierzu kann eine Trageeinheit für die Vorrichtung vorgesehen sein, die so konzipiert ist, dass sie die am Roboter vorgesehene Kamera nicht verdeckt und diese zum Zielen verwendet werden kann. Selbstverständlich ist es auch möglich, dass der Roboter über mehr als eine Kamera verfügt. Insbesondere kann an dem Roboter eine zusätzliche PTZ-Kamera montiert sein, um bestimmte Details besser aufzunehmen. Derartige Kameras können verschwenkt und geneigt werden. Auch kann die Brennweite verändert werden, um besondere Details aufzunehmen.

Die Vorrichtung kann von dem Roboter mit Energie versorgt werden oder auch eine eigene Energieversorgung aufweisen. Letzteres hat den Vorteil, dass die Vorrichtung unabhängig von einem Roboter funktionsfähig ist und keine energetische, sondern nur eine mechanische Kopplung mit dem Roboter erfolgen muss, falls dies im konkreten Anwendungsfall gewünscht ist.

Das Schusswerkzeug kann, wie bereits erwähnt, impulsbasiert sein, um ein Objekt direkt zu entschärfen. Es kann jedoch auch ein Schusswerkzeug eingesetzt werden, welches elektromagnetische Wellen, wie beispielsweise Röntgenstrahlen aussendet. Ein solches Schusswerkzeug kann zum Beispiel dazu genutzt werden, um ein Objekt zunächst näher zu untersuchen, damit dann eine Entscheidung über die beste und effektivste Entschärfungsmethode entschieden wird. Um die Röntgenstrahlung korrekt an dem Objekt auszurichten, kann die erfindungsgemäße Vorrichtung dann angewendet werden.

Weiterhin bevorzugt kann eine Begrenzungsgeometriekomponente vorgesehen sein. Diese schützt die umliegenden Bauteile sowie den Roboter vor Beschädigungen, insbesondere auch vor Beschädigungen durch den Einsatz des Schusswerkzeugs. Auch wenn der Roboter bei seinen Bewegungen stürzen sollte, werden die empfindlichen Bauteile, wie beispielsweise der Empfänger vor Beschädigungen geschützt.

In einem bevorzugten Ausführungsbeispiel sind noch eine oder mehrere Ausrichtungshilfen vorhanden, die der genauen Ausrichtung der Ziellaser bzw. deren Projektionsebenen dienen. Diese können die Ziellaser genau einstellen, beispielsweise wenn diese sich verstellt haben, auch durch äußere Einwirkung.

Die Ausrichtungshilfen können dabei radial um das Schusswerkzeug angeordnet sein und beispielsweise die Rechtwinkligkeit der projizierten Linien anzeigen.

Ein weiterer Gegenstand der vorliegenden Erfindung ist ein Roboter mit mehreren der vorerwähnten Vorrichtungen. Dieser Roboter sollte sich in unterschiedlichen Umgebungen bewegen können, um die Vorrichtungen in die Nähe des zu untersuchenden bzw. zu entschärfenden Objekts zu bringen, ohne dass eine Bedienperson in der Nähe und damit im Gefahrenbereich sein muss.

Es können auch mehrere unterschiedliche Schusswerkzeuge an dem Roboter vorgesehen sein, wobei das konkrete Schusswerkzeug in Abhängigkeit von der Entfernung und/oder der Beschaffenheit des Zielobjekts ausgewählt werden kann. Wenn mehrere Schusswerkzeuge vorgesehen sind, kann die Entschärfung eines Objekts schneller und sicherer erfolgen. Für jedes der Schusswerkzeuge kann dann das gleiche Trägersystem verwendet werden.

Weiterhin bevorzugt kann es vorgesehen sein, die Zieleinrichtung und/oder das Schusswerkzeug und/oder die Zündeinheit des Schusswerkzeugs manuell ein- oder auszuschalten. Dies ist beispielsweise dann sinnvoll, wenn der Roboter zuerst noch mit dem Schusswerkzeug bestückt und/oder ausgerichtet werden muss. Eine Fehlzündung kann dann genauso vermieden werden wie der Kontakt der Bedienperson mit der Strahlung der Ziellaser.

Für die Kommunikation zwischen der Bedienperson und dem Roboter und/oder der Zündeinheit des Schusswerkzeugs und/oder der Zieleinrichtung können, Funk, WLAN. Bluetooth, Infrarot, ein Mobilfunknetz oder eine andere drahtlose Datenverbindung vorgesehen sein. Für die Kommunikation mit und/oder die Steuerung des Roboters und/oder die Steuerung der Zieleinrichtung und/oder die Steuerung der Zündeinheit des Schusswerkzeugs ist vorzugsweise eine einzige drahtlose Datenverbindung vorgesehen. Wenn mehrere drahtlose Datenverbindungen verwendet werden, kann es zu Störungen zwischen diesen kommen. Dies wird durch die Verwendung einer einzigen Datenverbindung vermieden.

Bevorzugt ist das Schusswerkzeug fernzündbar. Hierdurch ist nur der Roboter in der Nähe der Bombe, wenn diese entschärft wird und keine Bedienperson. Üblicherweise ist am Roboter ein Empfänger vorhanden, der für den Empfang des Zündsignals zuständig ist. Dieses Signal wird dann vom Empfänger an die Zündeinheit weitergeleitet, die ebenfalls am Roboter angeordnet ist. Von der Zündeinheit gehen dann Kabel über elektrische Verbindungsmittel an der Zündeinheit direkt an das Schusswerkzeug. Handelt es sich um ein rückstoßkompensiertes Schusswerkzeug, werden die Kabel durch den austretenden Wasserstrahl, des den Rückstoß des Schusses kompensiert, häufig abgerissen. Wird ein nicht rückstoßkompensiertes Schusswerkzeug verwendet, so fliegt dieses durch den Rückstoß aus der Aufnahme des Trägersystems heraus und reißt das Kabel mit sich. In beiden Fällen reißt das Kabel an einer zufälligen Stelle und kann dabei auch die Zündeinheit und/oder andere Systembestandteile beschädigen, die dann erst repariert werden müssen, bevor das System wieder eingesetzt werden kann. Um dies zu verhindern, werden die besagten Kabel von den elektrischen Verbindungsmitteln an der Zündeinheit an erste elektrische Verbindungsmittel am Trägersystem angeordnet. Diese liegen auf der gleichen Seite des Roboters wie die Zündeinheit, so dass sie nicht im Weg des Rückstoßwasserstrahls bei einem rückstoßkompensierten Schusswerkzeug verlaufen. Innerhalb des Trägersystems werden die elektrischen Zündimpulse an zweite elektrische Verbindungsmittel weitergeleitet. Diese sind sehr nah am Schusswerkzeug bzw. dessen elektrischen Verbindungsmitteln angeordnet. Wird jetzt ein nicht rückstoßkompensiertes Schusswerkzeug verwendet, werden diese letzten Kabel zwar auch zerrissen, aber die Zündeinheit kann nicht geschädigt werden, da sich mit diesen Kabeln nicht unmittelbar verbunden ist.

Weitere Vorteile und Ausführungsbeispiele der Erfindung ergeben sich aus den Unteransprüchen, der weiteren Beschreibung und den Zeichnungen. In den Figuren ist die Erfindung in mehreren Ausführungsbeispielen dargestellt. Es zeigen:
- Fig. 1:: ein erstes erfindungsgemäßes System mit einem Roboter und einem Trägersystem hinten am Roboter, perspektivisch,
- Fig. 2:: das System aus Fig. 1 in Draufsicht,
- Fig. 3:: das Trägersystem aus Fig. 1 und 2 am Roboter montiert im Detail,
- Fig. 4:: der Roboter aus Fig. 1 bis 3 ohne Schusswerkzeug,
- Fig. 5:: das erfindungsgemäße System mit einem Trägersystem in der Greifeinheit des Roboters, perspektivisch
- Fig. 6:: das System aus Fig. 5 in Draufsicht,
- Fig. 7:: das Trägersystem aus Fig. 5 und 6 am Roboter montiert im Detail,
- Fig. 8:: das Trägersystem aus Fig. 5 bis 7, in seitlicher Perspektive,
- Fig. 9:: ein Roboter mit zwei erfindungsgemäßen Vorrichtungen, perspektivisch,
- Fig. 10:: eine Vergrößerung einer erfindungsgemäßen Vorrichtung mit Anzeige, von hinten,
- Fig. 11:: eine erfindungsgemäße Vorrichtung in einem weiteren Ausführungsbeispiel auf einem Roboter montiert, perspektivisch von hinten,
- Fig. 12:: die Vorrichtung aus Fig. 11, perspektivisch von vorne oben
- Fig. 13:: ein weiteres Ausführungsbeispiel einer erfindungsgemäßen Vorrichtung auf einer Greifeinheit montiert, perspektivisch von hinten,
- Fig. 14:: die Vorrichtung aus Fig. 13 perspektivisch von vorne,
- Fig. 15a:: eine erste Ausführungsform einer erfindungsgemäßen Hülse, perspektivisch,
- Fig. 15b:: eine zweite Ausführungsform einer erfindungsgemäßen Hülse, perspektivisch,
- Fig. 16:: eine erfindungsgemäße Spannmutter, perspektivisch,
- Fig. 17:: die Hülse aus Fig. 15b und die Spannmutter zusammengebaut, im Längsschnitt,
- Fig. 18a:: die Hülse aus Fig. 15a mit Ausnehmung und Spannmutter in Explosionsdarstellung,
- Fig. 18b:: die Hülse aus Fig. 15b mit Ausnehmung und Spannmutter in Explosionsdarstellung,
- Fig. 19a:: die Hülse aus Fig. 15a mit Trägersystem und einem ersten Schusswerkzeug,
- Fig. 19b:: die Hülse aus Fig. 15b mit Trägersystem und einem zweiten Schusswerkzeug,
- Fig. 20:: das Trägersystem mit Schusswerkzeug von hinten,
- Fig. 21:: Detail des Roboters mit Zündeinheit.

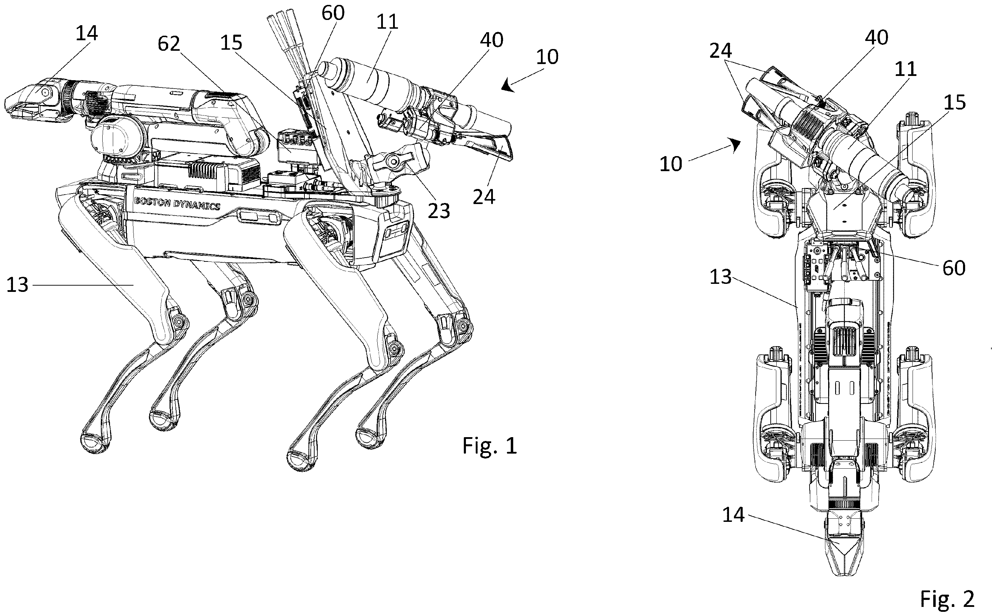

Die Fig. 1 bis 3 zeigen ein erfindungsgemäßes System mit einem Roboter 13 und einer Vorrichtung 10. Die Vorrichtung 10 umfasst ein Schusswerkzeug 11, welches in einer Aufnahme 41 an einem Trägersystem 40 angeordnet ist. Zur Zieleinrichtung dienen zwei Ziellaser 20.1, 20.2, welche als Linienlaser ausgebildet sind und welche später noch genauer beschrieben werden. Jeder der Ziellaser 20.1, 20.2 verfügt über einen Lichtschacht 24, der in etwa fächerförmig ausgestaltet ist. Der Lichtschacht 24 ist dabei hohl, so dass das Licht des Ziellasers 20.1, 20.2 hindurch geleitet werden kann. Die Vorrichtung 10 ist im hinteren Bereich des Roboters 13 angeordnet.

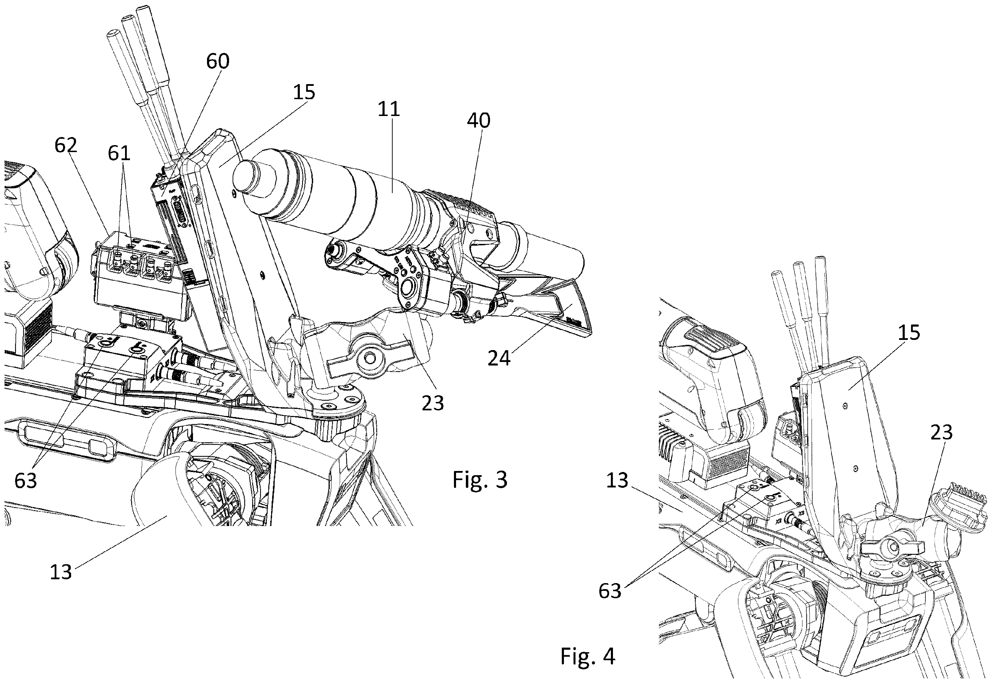

Es existiert eine Ausrichtungshilfe 23, die dafür sorgt, dass das Trägersystem 40 in eine bestimmte Richtung ausgerichtet werden kann, z.B. nach oben oder nach unten. Diese wird auch aus Fig. 4 deutlich. Des Weiteren erkennt man die Begrenzungsgeometriekomponente 15, die den Roboter 13 sowie weitere Bauteile vor Beschädigungen schützt, beispielsweise bei Verwendung des Schusswerkzeugs 11. Insbesondere der Empfänger 60, der hier als Funkgerät ausgebildet ist, wird von der Begrenzungsgeometriekomponente 15 geschützt. Des Weiteren ist auch die Zündeinheit 62 erkennbar, die ebenfalls durch die Begrenzungsgeometriekomponente 15 geschützt wird.

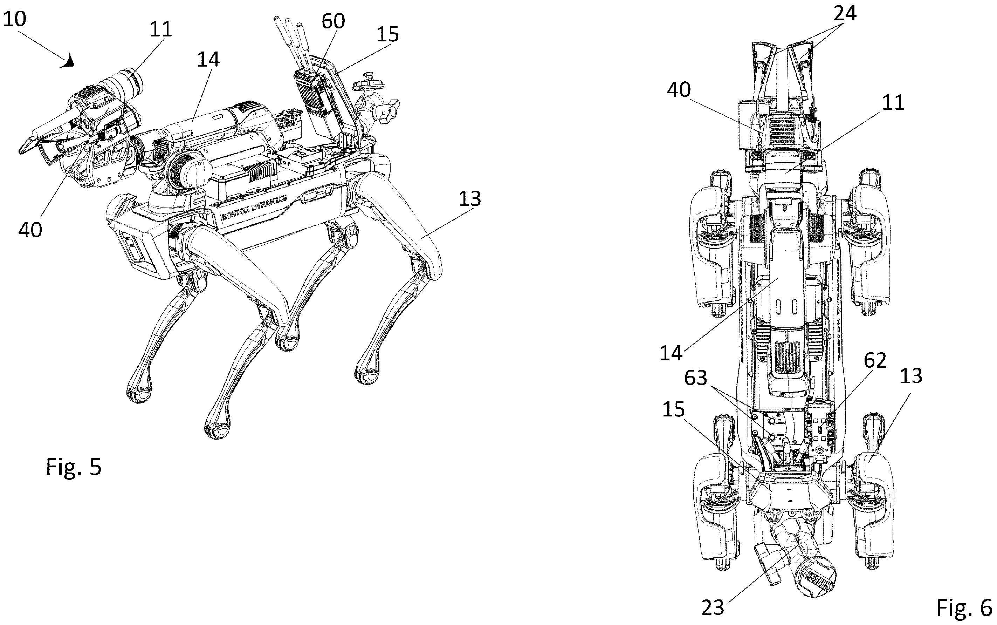

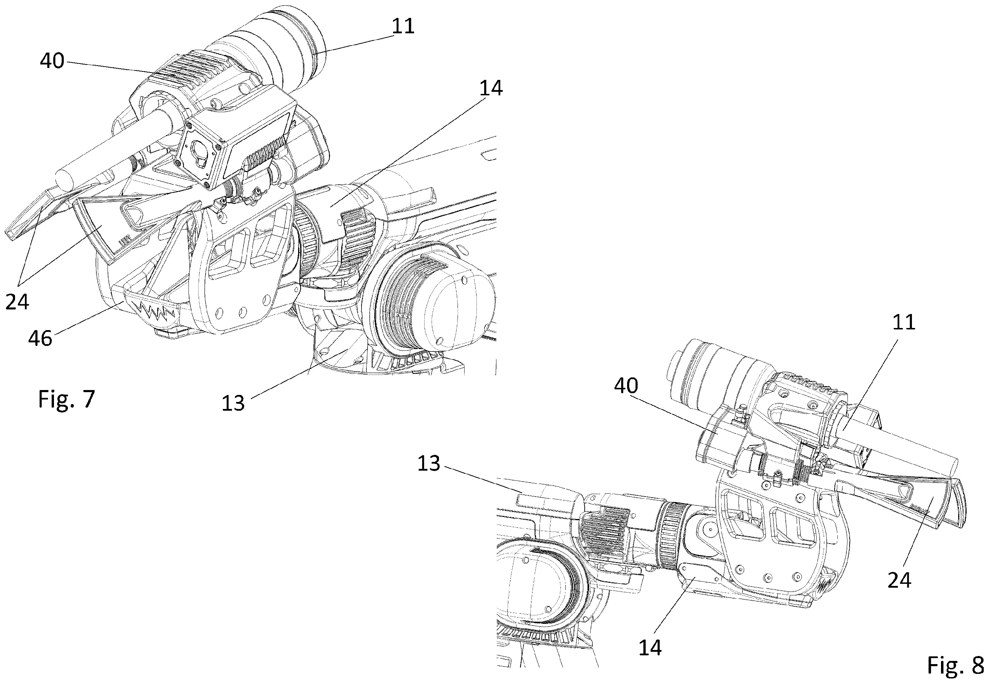

Der gleiche Roboter 13 und das gleiche Trägersystem 40 sind in den Fig. 5 bis 8 zu sehen. Dieses Mal ist das Trägersystem 40 an der als Greifarm ausgestalteten Greifeinheit 14 des Roboters 13 angeordnet. Der Empfänger 60 und die Begrenzungsgeometriekomponente 15 sind an der gleichen Stelle des Roboters 13 angeordnet wie im vorherigen Ausführungsbeispiel. Die Greifeinheit 14 hält dabei einen Bereich 46 des Trägersystems 40 fest, so dass das Trägersystem 40 fest am Roboter 13 angeordnet ist. Die in die Greifeinheit 14 eingebaute Kamera 12 wird dabei weder vom Trägersystem 40 noch von der Greifeinheit 14 verdeckt und kann von einer Bedienperson weiter verwendet werden. Dies ist aus den Fig. 7 und 8 gut ersichtlich. Die als Greifarm ausgebildete Greifeinheit 14 ist sehr beweglich, so dass auch beispielsweise unter Fahrzeugen oder in Hohlräumen befindliche Gegenstände mit dem Schusswerkzeug entschärft werden können. Darüber hinaus ist der hier verwendete Roboter 13 sehr beweglich, was einerseits dazu führt, dass er in den unterschiedlichsten Terrains eingesetzt werden kann, so auch in unwegsamem Gelände, und andererseits auch in Gebäuden, da er auch Treppen überwinden kann. Schließlich kann der Roboter 13 auch eine Vielzahl von Bewegungen auf der Stelle ausführen, wie Strecken, Ducken, sich seitlich Drehen usw. Zusammen mit dem Greifarm sind daher sehr viele, auch versteckte Stellen zugänglich.

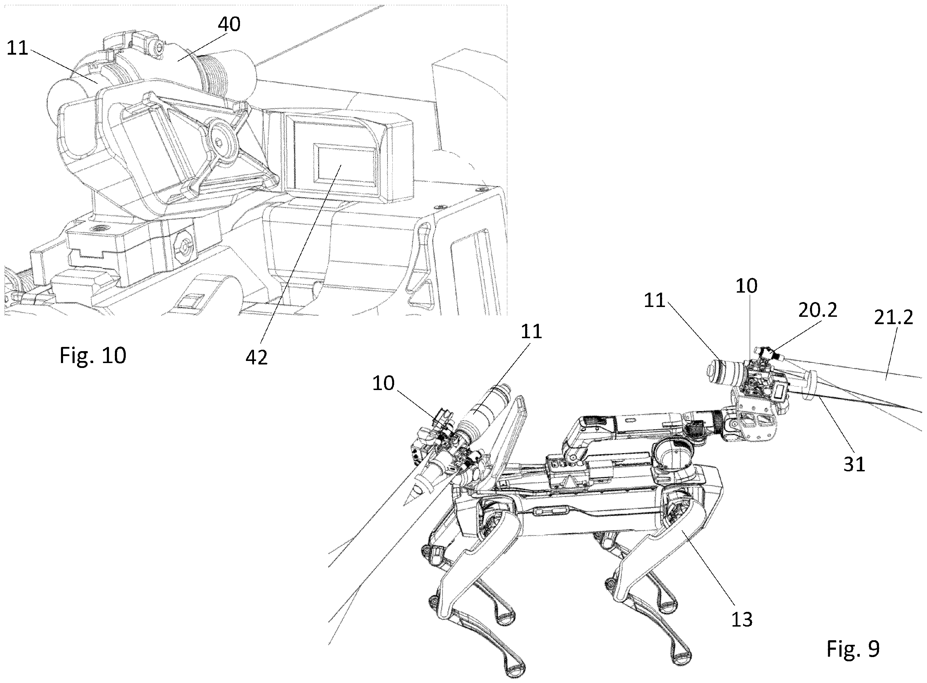

Fig. 9 zeigt einen Roboter 13 mit zwei erfindungsgemäßen Vorrichtungen 10. Die Vorrichtungen 10 unterscheiden sich voneinander und je nach Zielobjekt bzw. Lage oder Entfernung des Zielobjekts kann die eine oder die andere Vorrichtung 10 eingesetzt werden. In die Vorrichtungen 10 können unterschiedliche Schusswerkzeuge 11 eingebracht werden. Selbstverständlich können auch mehr als zwei Vorrichtungen 10 oder nur eine Vorrichtung 10 an dem Roboter 13 vorgesehen sein. Der Roboter 13 ist sehr geländegängig und kann auch in schwierigem Terrain die Vorrichtung 10 in Richtung des Zielobjekts bewegen. Er kann sich auch ducken und bücken und hat viele Freiheitsgrade in seiner Bewegung. Es können aber auch andere Arten von Robotern 13 oder andere Transporteinrichtungen verwendet werden, um die Vorrichtung 10 zum Zielobjekt zu bewegen. In Fig. 10 ist nochmals die Anzeige 42 ersichtlich. Hierzu existiert eine Abdeckung, die die Anzeige 42 vor Beschädigungen und störendem Lichteinfall schützen kann.

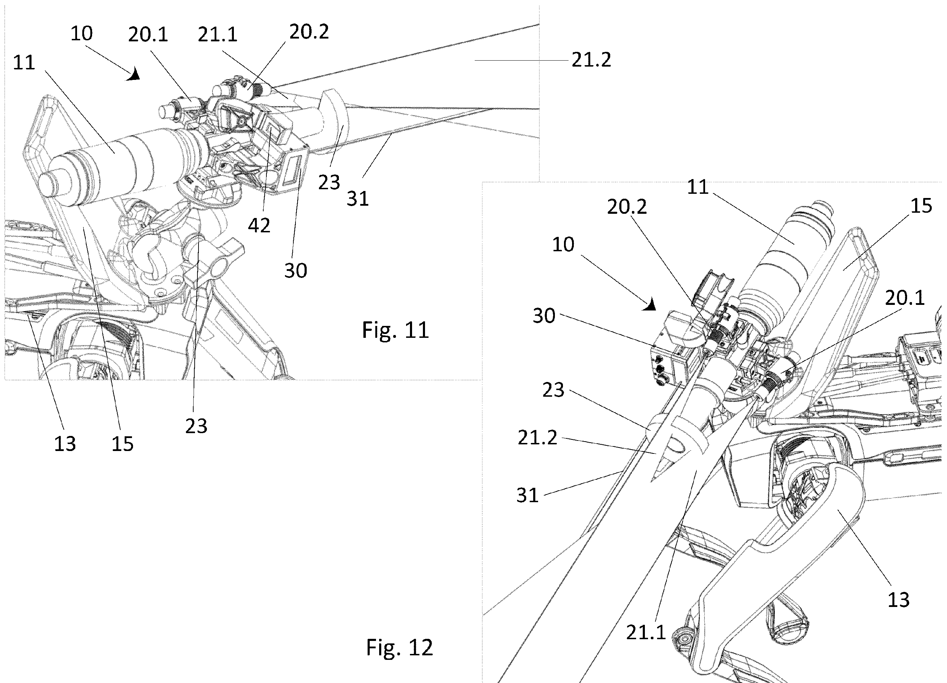

Fig. 11 und Fig. 12 zeigen eine erfindungsgemäße Vorrichtung 10, die ein Trägersystem 40 umfasst und auf einem Roboter 13 montiert ist, um ein erfindungsgemäßes System zu bilden. Man erkennt das Schusswerkzeug 11 und die beiden Ziellaser 20.1 und 20.2, die die Projektionsebenen 21.1 und 21.2 bilden. Die Schnittlinie der beiden Projektionsebenen 21.1. und 21.2 bildet die Schusslinie des Schusswerkzeugs 11. Des Weiteren erkennt man das Entfernungsmessgerät 30, welches mittels eines Lasers 31 die Entfernung zum Zielobjekt misst. Im Bereich des Entfernungsmessgeräts 30 ist auch noch eine Kamera 12 angeordnet, die den Zielbereich, das Zielobjekt und/oder die Umgebung aufnimmt. In dem hier gezeigten Ausführungsbeispiel wird hierfür die integrierte Kamera 12 der Griffeinheit 13 verwendet. In Fig. 11 ist darüber hinaus noch eine Anzeige 42 erkennbar, die Daten z.B. zur Entfernung des Zielobjekts oder auch anderer Art anzeigen kann. Des Weiteren ist noch die Begrenzungsgeometriekomponente 15 vorgesehen, die dem Schutz der umliegenden Bauteile und des Roboters 13 vor Beschädigung, insbesondere durch den Einsatz des Schusswerkzeugs 11 dient, sowie der zweckmäßigen Ausrichtung der Vorrichtung 10.

Des Weiteren ist die Ausrichtungshilfe 23 zu erkennen, die dazu dient, die Ziellaser 20.1 und 20.2 und ihre Projektionsebenen 21.1 und 21.2 zur Schussachse auszurichten. Dies kann auch erfolgen, wenn die Ziellaser 20.1 und 20.2 zum Beispiel durch äußere Einwirkung verstellt haben.

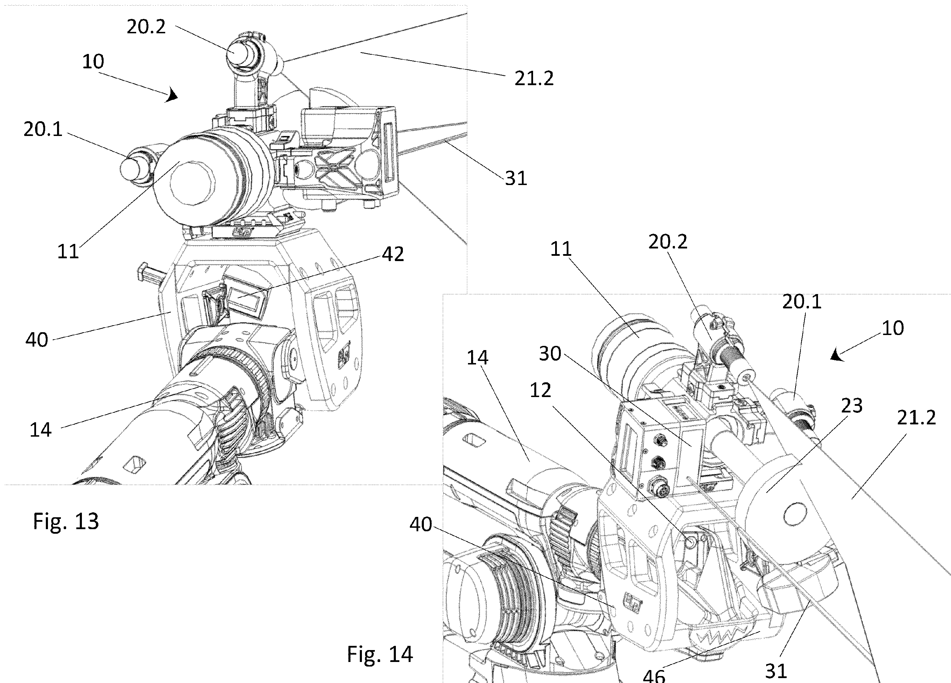

Die Fig. 13 und 14 zeigen ein weiteres Ausführungsbeispiel der Erfindung. Das hier dargestellte Schusswerkzeug 11 ist auf einem Trägersystem 40 angeordnet. In dem hier gezeigten Ausführungsbeispiel handelt es sich dabei um eine als Greifarm ausgestaltete Greifeinheit 14 des Roboters 13. Auch hier sind wieder die beiden Ziellaser 20.1 und 20.2 ersichtlich mit ihren Projektionsebenen 21.1 und 21.2, deren Schnittlinie die Ziellinie des Schusswerkzeugs 11 bildet. Auch hier sind wieder das Entfernungsmessgerät 30 und die integrierte Kamera 12 erkennbar. Das speziell ausgestaltete Trägersystem 40 ermöglicht die Verwendung der integrierten Kamera 12 des Roboters 13 zum Zielen auf das zu treffende Ziel, da diese durch das Trägersystem 40 und auch durch die Greifeinheit 14 des Roboters 13 nicht verdeckt wird. In diesem besonders bevorzugten Ausführungsbeispiel ist das Trägersystem 40 so an die Greifeinheit 14 angepasst, dass die Greifeinheit 14 einen Bereich 46 des Trägersystems 40 umgreift.

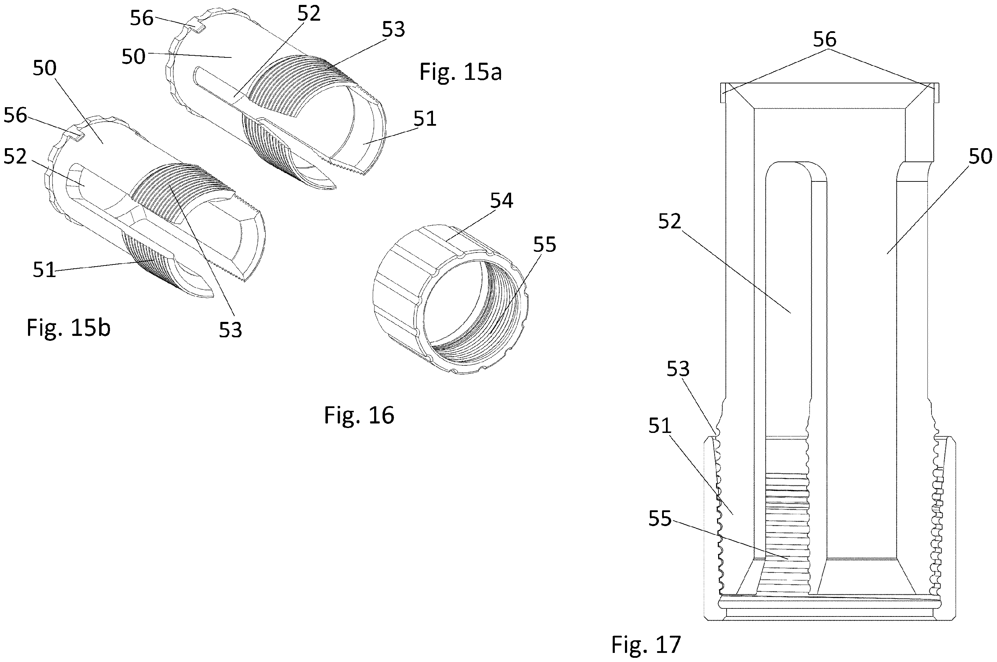

Die Fig. 15a und 15b zeigen zwei verschiedene erfindungsgemäße Hülsen 50. Diese verfügen an ihrem jeweiligen einen Ende 51 über mehrere Schlitze 52 sowie je ein Außengewinde 53. Die Außenabmessungen der Hülsen 50 sind identisch, allerdings ist der Innendurchmesser unterschiedlich. So können Schusswerkzeuge mit unterschiedlichen Außendurchmessern in die verschiedenen Hülsen eingebracht werden.

Fig. 16 zeigt eine Spannmutter 54, die ein Innengewinde 55 aufweist, welches auf das Außengewinde 53 jeder der beiden Hülsen 50 aus Fig. 15a und 15b passt. Das Innengewinde 55 der Spannmutter 54 verläuft konisch. Wird die Spannmutter 54 auf eine Hülse 50 geschraubt, so drückt das konische Innengewinde 55 der Spannmutter 54 die Hülse 50 zusammen, die sich dank der Schlitze 52 verjüngen lässt, und kann so ein Schusswerkzeug 11 sicher in der Aufnahme 41 des Trägersystems 40 halten. Das Zusammenwirken der Hülse 50 und der Spannmutter 54 ist in Fig. 17 dargestellt. Hier ist auch der Vorsprung 56 erkennbar, der in diesem Ausführungsbeispiel gleichzeitig als Rändelung der Hülse 50 dient.

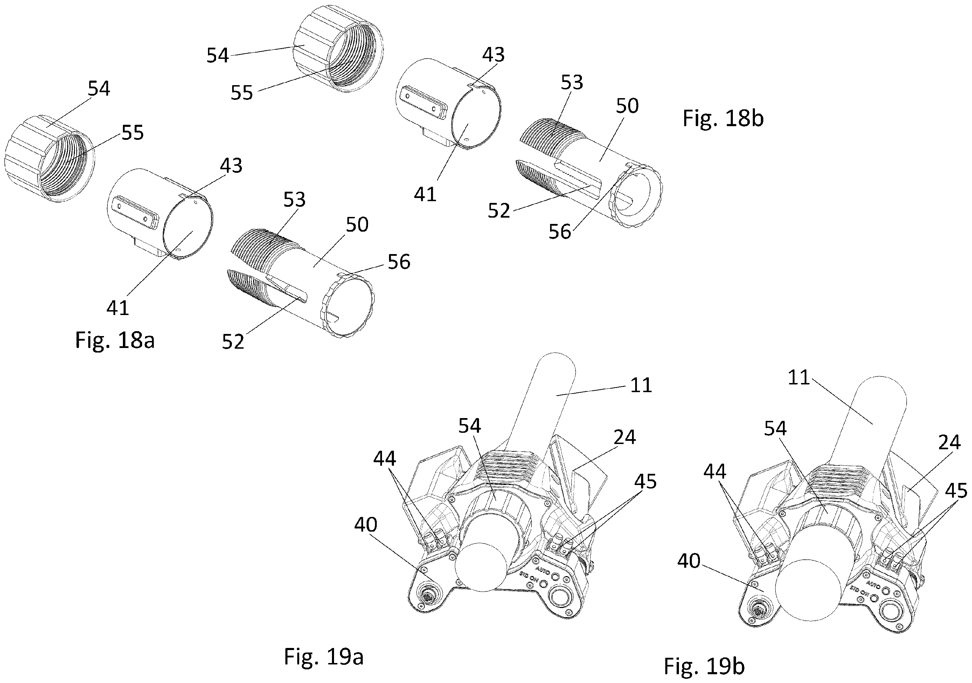

Die Fig. 18a und 18b zeigen nochmals die Bauteile Spannmutter 54, Hülse 50 und Aufnahme 41. Hier sieht man auch den Vorsprung 56 an der Hülse 50, der in die Ausnehmung 43 an der Aufnahme 41 eingreift, damit die Hülse 50 verdrehsicher in der Aufnahme 41 gehalten ist und sich beim Verschrauben der Spannmutter 54 nicht mit dreht.

In den Fig. 19a und 19b sieht man, wie am gleichen Trägersystem 40 Schusswerkzeuge 11 mit unterschiedlichem Außendurchmesser und unterschiedlicher Länge angeordnet sind. Man erkennt die Spannmuttern 54, die die in den Aufnahmen 41 der Trägersysteme 40 angeordneten Hülsen 50 halten. Die Hülsen 50 sind hier nicht zu sehen, sondern von der umfassenden Geometrie der Vorrichtung verdeckt.

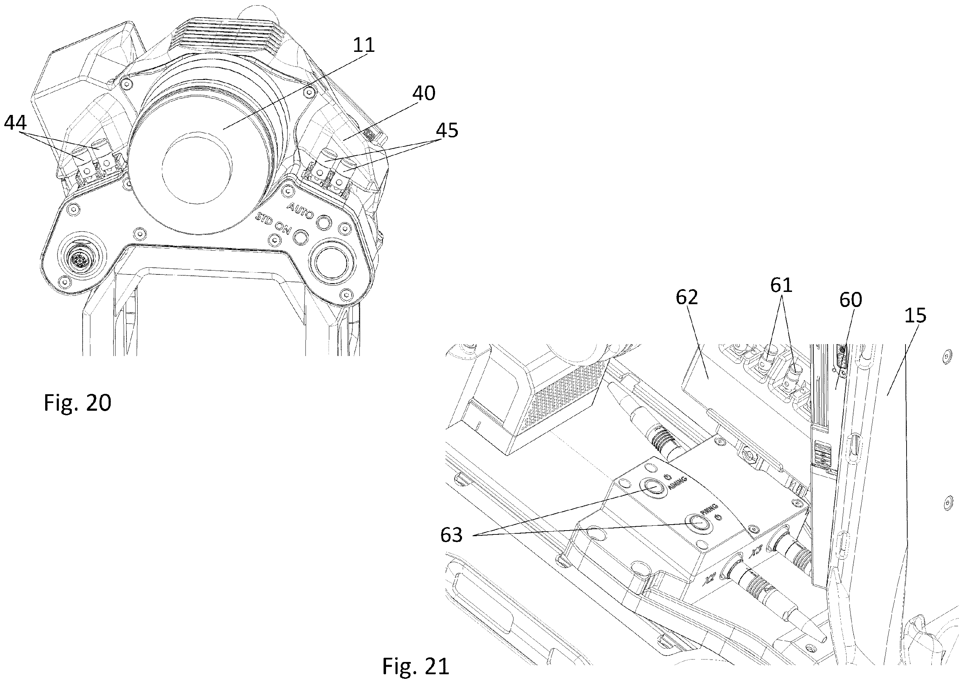

In Fig. 20 sieht man das Trägersystem 40 mit Schusswerkzeug 11. Hier sind die ersten elektrischen Verbindungsmittel 44 und die zweiten elektrischen Verbindungsmittel 45 erkennbar. Die ersten elektrischen Verbindungsmittel 44 und die zweiten elektrischen Verbindungsmittel 45 sind innerhalb des Trägersystems 40 elektrisch miteinander verbunden und leiten das vom Empfänger 60 empfangene und an die Zündeinheit 62 abgegebene Zündsignal weiter. An die zweiten elektrischen Verbindungsmittel 45 werden dann Kabel angeschlossen, welche den Zündimpuls an das Schusswerkzeug 11 weiterleiten. Dieses Kabel ist jedoch relativ kurz, beispielsweise 10 cm bis 20 cm, und nicht direkt mit der Zündeinheit 62 verbunden, so dass diese bei einem Reißen des Kabels nicht beschädigt wird. Die Zündeinheit 62 mit den beiden an ihr angeordneten elektrischen Verbindungsmitteln 61 ist in Fig. 21 dargestellt. Hier erkennt man auch Knöpfe 63, mit denen das Zielsystem und das Zündsystem manuell aus- und eingeschaltet werden können.

Abschließend sei noch darauf hingewiesen, dass die hier dargestellten Ausführungsformen lediglich beispielhafte Ausgestaltungen der Erfindung sind. Diese ist nicht darauf beschränkt. Es sind vielmehr noch Abänderungen und Abwandlungen möglich. So können mehr als zwei Linienlaser für die Zielerfassung vorgesehen sein, bzw. die Laser das Licht in einer anderen Form aussenden und auch der Zielpunkt nicht in der einem Kreuz, sondern auch in einer anderen Form angeordnet sein. Die Anzeige kann an der Vorrichtung oder in der Nähe der Vorrichtung angeordnet sein oder auch von der Vorrichtung beabstandet sein. Das Trägersystem kann von der Greifeinheit des Roboters selbständig gegriffen werden. Hierzu kann es in einer Einrichtung am Roboter selbst oder in der Nähe des Roboters bzw. der zu entschärfenden Bombe angeordnet sein. So ist es auch möglich, dass der Roboter das in der Greifeinheit befindliche Trägersystem ablegt, um beispielsweise mit der Greifeinheit eine Tür zu öffnen oder eine andere Bewegung oder eine andere Tätigkeit auszuführen, und dann das Trägersystem wieder aufnimmt. Zur Zieleinrichtung können auch ein oder mehrere Linienlaser dienen.

### Bezugszeichenliste:

- 10: Vorrichtung
- 11: Schusswerkzeug
- 12: Kamera
- 13: Roboter
- 14: Greifeinheit von 13
- 15: Begrenzungsgeometriekomponente
- 20.1: Ziellaser
- 20.2: Ziellaser
- 21.1: Projektionsebene von 20.1
- 21.2: Projektionsebene von 20.2
- 22: Kreuzungslinie
- 23: Ausrichtungshilfe
- 24: Lichtschacht
- 30: Entfernungsmessgerät
- 31: Laser
- 40: Trägersystem
- 41: Aufnahme
- 42: Anzeige
- 43: Ausnehmung
- 44: Erste elektrische Verbindungsmittel
- 45: Zweite elektrische Verbindungsmittel
- 46: Bereich an 40
- 50: Hülse
- 51: Eines Ende von 50
- 52: Schlitz
- 53: Außengewinde an 50
- 54: Spannmutter
- 55: Innengewinde an 54
- 56: Vorsprung
- 60: Empfänger
- 61: Elektrische Verbindungsmittel an 62
- 62: Zündeinheit
- 63: Knopf

## Patentansprüche

1. System umfassend einen Roboter (13) und wenigstens eine Vorrichtung (10) zur zielgerichteten Ausrichtung von Schusswerkzeugen (11) mit einer Schussachse auf ein zu treffendes Ziel
mit mindestens einem Trägersystem (40) für ein Schusswerkzeug (11), welches eine Zieleinrichtung umfasst und wenigstens eine Aufnahme (41) aufweist, in welche das Schusswerkzeug (11) bereichsweise einbringbar ist,
**dadurch gekennzeichnet,**
**dass** in die Aufnahme (41) eine Vielzahl unterschiedlich geformter Schusswerkzeuge (11) einbringbar und dort festlegbar ist.

2. System nach Anspruch 1, **dadurch gekennzeichnet, dass** wenigstens eine Hülse (50) vorgesehen ist, die in die Aufnahme (41) am Trägersystem (40) einbringbar und dort festlegbar ist.

3. System nach Anspruch 2, **dadurch gekennzeichnet, dass** die Hülse (50) an ihrem einen Ende (51) entlang ihrer Längsrichtung wenigstens einen Schlitz (52) aufweist und ein Außengewinde (53) umfasst, welches sich auch im Bereich des bzw. der Schlitze (52) erstreckt
und dass eine Spannmutter (54) vorgesehen ist, die ein Innengewinde (55) umfasst und die auf das Außengewinde (53) an der Hülse (50) schraubbar ist.

4. System nach Anspruch 3, **dadurch gekennzeichnet, dass** das Außengewinde (53) der Hülse (50) und/oder das Innengewinde (55) der Spannmutter (54) konisch oder anderweitig progressiv zulaufend ausgebildet ist.

5. System nach einem der Ansprüche 2 bis 4, **dadurch gekennzeichnet, dass** die Hülse (50) einen Vorsprung (56) aufweist und die Aufnahme (41) eine Ausnehmung (43) umfasst, die derart miteinander zusammenwirken können, dass die Hülse (50) verdrehsicher in der Aufnahme (41) halterbar ist.

6. System nach einem der Ansprüche 1 bis 5, **dadurch gekennzeichnet, dass** ein Bereich (46) des Trägersystems (40) von einer am Roboter (13) befindlichen Greifeinheit (14) gegriffen werden kann, um das Schusswerkzeug (11) am Roboter (13) festzulegen.

7. System nach Anspruch 6, **dadurch gekennzeichnet, dass** am Roboter (13) wenigstens eine Kamera (12) vorgesehen ist, die auch bei von der Greifeinheit (14) gegriffenem Trägersystem (40) weder durch das Trägersystem (40) noch durch die Greifeinheit (14) verdeckt wird.

8. System nach einem der Ansprüche 1 bis 7, **dadurch gekennzeichnet, dass** die Zieleinrichtung wenigstens zwei als Linienlaser ausgeführte Ziellaser (20.1, 20.2) aufweist, deren Projektionsebenen (21.1, 21.2) in einem von 180° verschiedenen Winkel um die Schussachse herum angeordnet sind und die sich schneiden und dabei eine Kreuzungslinie bilden, die mit der Schussachse identisch ist und die weiterhin einen Zielpunkt besitzt, der durch die Projektion der Kreuzungslinie auf das zu treffende Ziel definiert wird, wenn das Licht der Ziellaser (20.1, 20.2) auf das Ziel trifft.

9. System nach einem der Ansprüche 1 bis 8, **dadurch gekennzeichnet, dass** ein separates Entfernungsmessgerät (30) vorgesehen ist, welches die Entfernung der Vorrichtung (10) zu dem zu treffenden Ziel mittels wenigstens eines Lasers (31) und/oder einer anderweitigen geeigneten Entfernungsmesseinrichtung misst.

10. System nach einem der Ansprüche 8 oder 9, **dadurch gekennzeichnet, dass** für jeden der Ziellaser (20.1, 20.2) ein Lichtschacht (24) vorgesehen ist, der den Fächer der Strahlen nachbildet und diesen umhaust, so dass der Strahlquerschnitt des jeweiligen Ziellasers (20.1, 20.2) am Strahlungsaustritt weiter aufgefächert ist.

11. System nach einem der Ansprüche 1 bis 10, **dadurch gekennzeichnet, dass** eine Begrenzungsgeometriekomponente (15) vorgesehen ist, die dem Schutz der umliegenden Bauteile und/oder des Roboters (13) vor Beschädigung, insbesondere durch den Einsatz des Schusswerkzeugs (11), dient.

12. System nach einem der Ansprüche 1 bis 11, **dadurch gekennzeichnet, dass** die Vorrichtung (10) über eine oder mehrere Ausrichtungshilfen (23) verfügt, die der Ausrichtung der Ziellaser (20.1, 20.2) und deren Projektionsebenen (21.1, 21.2) zur Schussachse bzw. der Ausrichtung des Schusswerkzeugs (11) dienen.

13. System nach einem der Ansprüche 1 bis 12, **dadurch gekennzeichnet, dass** am Roboter (13) mehrere Schusswerkzeuge (11) vorgesehen sind und das konkrete Schusswerkzeug (11) in Abhängigkeit von der gemessenen Entfernung der Vorrichtung (10) zum Ziel und/oder der Beschaffenheit des Ziels ausgewählt wird.

14. System nach einem der Ansprüche 1 bis 13, **dadurch gekennzeichnet, dass** die Zieleinrichtung und/oder das Schusswerkzeug (11) bzw. dessen Zündeinheit (62) manuell ein- und/oder ausschaltbar sind.

15. System nach einem der Ansprüche 1 bis 14, **dadurch gekennzeichnet, dass** die Kommunikation mit dem Roboter (13) und/oder der Zündeinheit (62) des Schusswerkzeugs (11) und/oder der Zieleinrichtung mittels Funk, WLAN, Bluetooth, Infrarot, ein Mobilfunknetz oder einem anderen drahtlosen Datenverbindung erfolgt
und dass für die Kommunikation und/oder die Steuerung des Roboters (13), die Steuerung der Zieleinrichtung und/oder die Zündeinheit (62) für die Zündung des Schusswerkzeugs (11) eine einzige drahtlose Datenverbindung verwendet wird.

16. System nach einem der Ansprüche 1 bis 15, **dadurch gekennzeichnet, dass** das Schusswerkzeug (11) fernzündbar ist und am Roboter (13) ein Empfänger (60) für den Empfang des Zündsignals angeordnet ist, wobei vom Empfänger (60) über die Zündeinheit (62), unter Zwischenschaltung von elektrischen Verbindungsmitteln (61) an der Zündeinheit (62), Kabel, die den Zündimpuls an das Schusswerkzeug (11) weitergeben, in das Trägersystem (40) über erste elektrische Verbindungsmittel (44) eingespeist und dort an zweite elektrische Verbindungsmittel (45) innerhalb des Trägersystems (40) weitergeleitet werden, wobei die zweiten elektrischen Verbindungsmittel (45) nahe an dem Schusswerkzeug (11) angeordnet sind.
